# EUROPÄISCHE PATENTSCHRIFT

(11) **EP 0 447 842 B1**
(45) Veröffentlichungstag und Bekanntmachung des Hinweises auf die Patenterteilung: **13.07.1994**
(21) Anmeldenummer: 91102868.6
(22) Anmeldetag: 27.02.1991
(51) Int. Cl.: H04B 3/44

(54) **Kabelgebundenes Gleichspannungs-Fernspeisesystem**
Remote d.c. - power supply system for a cable
Système d'alimentation c.c. à distance par câble

(30) Priorität: 23.03.1990 DE 4009324; 16.05.1990 DE 4015672
(43) Veröffentlichungstag der Anmeldung: 25.09.1991
(73) Patentinhaber: ANT Nachrichtentechnik GmbH, D-71522 Backnang (DE)
(72) Erfinder: Reustle, Hans, Dipl.-Ing. (FH), W-7152 Aspach (DE)

(56) Entgegenhaltungen:
- DD-A- 158 607
- DE-A- 2 217 754
- DE-A- 3 701 395
- DE-B- 1 121 120
- DE-B- 1 264 517
- DE-B- 1 938 053

## Beschreibung

Die Erfindung betrifft ein Gleichspannungs-Fernspeisesystem.

Zur Fernspeisung von Verbrauchern, z.B. Zwischenregeneratoren einer Nachrichtenübertragungsstrecke, wird üblicherweise eine Gleichstromfernspeisung (Tech. Mitteilung, AEG Telefunken, Beiheft Analoge Übertragungseinrichtungen 1977, Seiten 74 bis 78) oder eine Wechselstromfernspeisung (Tech. Mitteilungen, AEG Telefunken 1980, Nr. 4 bis 6, Seiten 216 bis 220) verwendet. In beiden Fällen ist die übertragbare Leistung ungenügend, insbesondere wenn aufgrund von Schutzvorschriften die verwendbaren Spannungen oder Ströme begrenzt sind (VDE 0100 Teil 410 und VDE 0800).
Aus DD-PS 158 607 ist ein Fernspeisesystem bekannt, wobei jeder Fernspeiseabschnitt einen Gleichspannungswandler mit galvanischer Trennung enthält. Die DD-PS 158 607 enthält keine Anregungen, Leistungsverluste zu minimieren, um möglichst lange Fernspeisestrecken überbrücken zu können.

Aus der DE 19 38 053 B2 ist ein Verfahren zur Wechselstrom-Parallelfernspeisung bekannt. Dort wird die Spannung am Anfang jeden Fernspeiseabschnittes mittels eines Transformators hochtransformiert, um Spannungsabfälle auf der Fernspeiseleitung zu kompensieren. Um zu verhindern, daß die Spannung insbesondere bei Leitungsunterbrechungen nicht zu stark ansteigt, ist eine magnetische Regelung vorgesehen. Diese Regelung kann zu hohen Sättigungsverlusten führen.

Aufgabe der Erfindung ist es, ein Gleichspannungs-Fernspeisesystem aufzuzeigen, mit dem möglichst lange Fernspeisestrecken überbrückbar sind. Diese Aufgabe wird durch die Merkmale des Patentanspruchs 1 gelöst. Die Unteransprüche zeigen Weiterbildungen auf. Durch die Maßnahmen des Anspruchs 2 werden insbesondere schädliche Auswirkungen von Beeinflussungsspannungen verhindert. Die Erfindung geht von der Erkenntnis aus, daß die Leitungsverluste am geringsten sind, wenn die Fernspeisespannung in jedem Fernspeiseabschnitt möglichst hoch ist. Durch einen Gleichspannungswandler in jedem Fernspeiseabschnitt läßt sich die Fernspeisespannung auf einen Wert hochregeln, der ungefähr dem Maximalwert der ohne besondere Berührungsschutzmaßnahmen zulässige Spannungen, nach VDE 0800 z.B. 120 V, entspricht. Mit den Maßnahmen der Erfindung ist die überbrückbare Fernspeisestrecke höher als bei bekannten Fernspeisesystemen. Da jeweils Gleichspannungswandler mit galvanischer Trennung verwendet werden, ist eine Abriegelung von Teilstrecken gegen schädliche Beeinflussungsspannungen zusätzlich erreicht.

Aus der DE 32 27 299 A1 ist es an sich bekannt, in einem Fernspeisenetz Gleichspannungswandler vorzusehen. Diese dienen jedoch dem Zweck, die von Stromwandlern in einem Gleichstrom-Reihen-Fernspeisesystem gelieferten unterschiedlichen Spannungen auf eine einheitliche Versorgungsspannung für die Zwischenregeneratoren hochzusetzen. Diese Gleichspannungswandler befinden sich bei der DE 32 27 299 A1 jedenfalls in Nebenkreisen, so daß sich hieraus keine Anregung für das der Erfindung zugrundeliegende Problem entnehmen läßt. Die Fernspeise-Reichweite ist bei der Realisierung gemäß DE 32 27 299 A1 ebenso begrenzt wie bei anderen bekannten Fernspeisesystemen.

Wenn Schaltregler über einen Widerstand, insbesondere den Leitungswiderstand eines Kommunikationsnetzes betrieben werden, kann der Schaltregler in einen Reglerarbeitspunkt gelangen, aus dem er selbstständig nicht mehr herauskommen kann. Dieser Fall tritt beispielsweise dann ein, wenn die Belastung des Schaltreglers so groß wird, daß die Eingangsspannung des Schaltreglers kleiner wird als die minimal notwendige und damit ein Hochlaufen des Schaltreglers nicht mehr möglich ist. Als Speisespannung sei hier jene Spannung definiert, die am leitungsfernen Ende des Schaltreglers beispielsweise zwischen den Klemmen der Amtsbatterie auftritt. Um einen solchen unerwünschten Reglerarbeitspunkt zu vermeiden, ist es prinzipiell möglich, einen Komparator zu verwenden, der eine Freigabe des Schalttransistors nur dann zuläßt, wenn eine Eingangsspannungsschwelle größer als die Hälfte der Speisespannung überschritten wird.

Aus der DE 37 01 395 A1 ist ein Verfahren zum Betreiben eines Schaltreglers bekannt, bei dem ein derartiger Reglerarbeitspunkt nicht angenommen werden kann, indem der Schaltregler so lange blockiert wird bis sein Eingangskondensator geladen ist. Sollte der Spannungsabfall am Schaltreglerstellglied kleiner als die Eingangsspannung werden, wird der Schaltregler blockiert, bis ein Wiederanlauf möglich ist. Beim Verfahren gemäß der DE 37 01 395 A1 wird der Energieaufnahmestrom des Schaltreglers gemessen und bei Erreichen eines vorgegebenen Wertes das Schaltreglerstellglied abgeschaltet. Aus der DE 35 13 625 A1 ist ebenfalls ein Schaltregler bekannt, der über einen Leistungswiderstand eines Kommunikationsnetzes betrieben wird. Zur Vermeidung unkontrollierter Betriebszustände sind auch dort Schutzmaßnahmen getroffen: Verzögerung des Einsatzes der Regelung des Pulsbreitenmodulators, Begrenzung des Energieaufnahmestroms des Schaltreglers, Pufferung durch einen Energiespeicher am Eingang des Schaltreglers.

Durch die Maßnahmen gemäß Ansprüchen 3 bzw. 4 ist in einem Fernspeisenetz ein sicheres Anlaufen ohne nachteilige Auswirkung auf die Regelmöglichkeiten gewährleistet.

Durch letztgenannte Maßnahmen der Erfindung stellen sich folgende Vorteile ein: Beim Anlauf des Schaltreglers ist eine definierte Eingangskennlinie vorgegeben, die unerwünschte Betriebszustände verhindert. Auch bei Kaskadierung von mehreren Schaltreglern in einem Gleichspannungs-Fernspeisesystem ist ein sicherer Anlauf gewährleistet. Es treten keine Arbeitspunkte eines Schaltreglers auf von denen aus ein selbsttätiger Anlauf nicht möglich ist.

Anhand der Zeichnungen wird die Erfindung nun näher erläutert.
Es zeigen:
- Figur 1: ein Prinzipschaltbild eines Fernspeisesystems nach der Erfindung
- Figur 2: ein Prinzipschaltbild eines Schaltreglers, mit dem das Fernspeisesystem nach der Erfindung betrieben werden kann,
- Figur 3: in Kette geschaltete Schaltregler,
- Figur 4: eine Anlaufkennlinie eines Schaltreglers,
- Figur 5: die Ableitung der Steuerimpulse für das Schaltreglerstellglied
- Figur 6: einen Stromlaufplan zur Steuerung des Stellgliedes eines Schaltreglers gemäß dem Verfahren nach der Erfindung.

Das Fernspeisesystem gemäß der Erfindung besteht aus einer Gleichspannungsspeisequelle GSQ, die eine Ausgangsgleichspannung Û von z.B. 120 V aufweist. Diese Fernspeisespannung Û von 120 V entspricht der nach VDE ohne besondere Berührungsschutzmaßnahmen maximal zulässigen Berührspannung. Durch Leitungsverluste - Feldschleifenwiderstand der Fernspeiseleitung FL - hat die Fernspeisespannung am Ende des ersten Fernspeiseabschnitts nur noch einen Wert Uₑ von beispielsweise 110 V. Über einen als Schaltregler ausgebildeten Gleichspannungswandler GL1 wird diese Spannung Uₑ auf den ursprünglichen Wert Û hochgeregelt, so daß der nächste Fernspeiseabschnitt wieder eine anfängliche Fernspeisespannung von Û aufweist. Der Schaltregler ist galvanisch getrennt ausgebildet, beispielsweise dadurch, daß der Schalttransistor TS in Serie zur Primärwicklung der Schaltreglerdrossel SD angeordnet ist, und die Sekundärwicklung der Schaltreglerdrossel SD im Stromkreis des nachfolgenden Fernspeiseabschnittes liegt. Am Ende des zweiten Fernspeiseabschnittes ist der Schaltregler GL2 angeordnet, der wie der Schaltregler GL1 die wiederum durch die Leitungsverluste auf den Wert Uₑ abgesunkene Fernspeisespannung auf den Wert Û hochregelt. Am Anfang des letzten Fernspeiseabschnittes befindet sich der Schaltregler GLn. Jeder Schaltregler enthält einen Pulsbreitenmodulator PBM, der beispielsweise anhand der Kriterien Ausgangsspannung und/oder Eingangsspannung zusammen mit einem Taktgenerator TG die Leitendzeit des Schalttransistors TS bestimmt.

Die Gleichspannungswandler GL1, GL2, ... , GLn weisen separate Ausgänge auf zur Leistungsversorgung von Verbrauchern, beispielsweise Zwischenregeneratoren ZR1, ZR2, ... , ZRn eines Nachrichtenübertragungssystems. Die Regeneratoren entnehmen dabei aus dem Fernspeisesystem jeweils die Leistungen P_{ZR1}, P_{ZR2}, ... , P_{ZRN}. Nicht an jeden Schaltregler muß ein Verbraucher angeschlossen sein. Wenn eine lange Fernspeisestrecke überbrückt werden muß auf der eine Zwischenregenerierung des Informationssignals noch nicht notwendig ist, z.B. bei hochwertigen Lichtwellenleiter-Übertragungssystemen, kann es dennoch zweckmäßig sein, einen Schaltregler zur Umsetzung der durch Leistungsverluste abgesunkenen Fernspeisespannung zwischenzuschalten. Diese Maßnahme weist den zusätzlichen Vorteil auf, daß eine galvanische Abriegelung erfolgt und sich Beeinflussungsspannungen, insbesondere bei Nachrichtenübertragungssystemen entlang von Hochspannungsleitungen, nicht schädlich auswirken können.

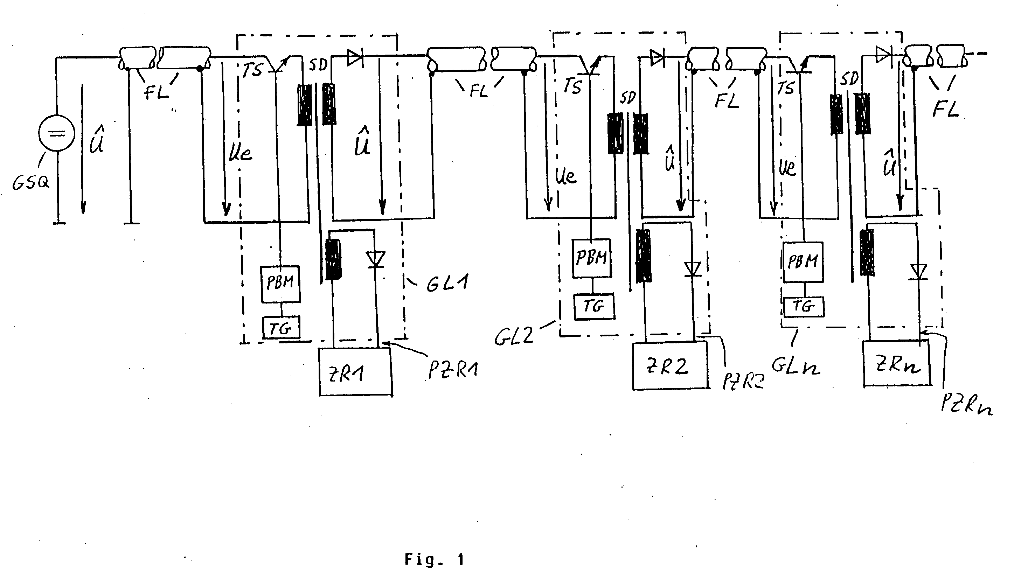

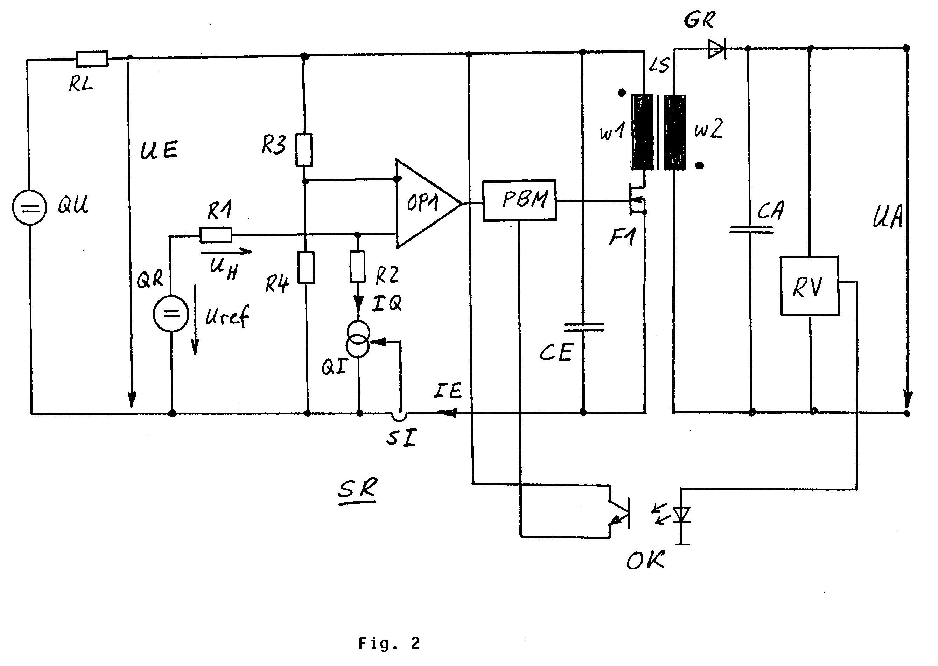

Fig. 2 zeigt einen Schaltregler als Prototyp der Gleichspannungswandler GL1, GL2, ..., GLn von Fig. 1 mit beigeordneter Regeleinrichtung. Dieser Schaltregler SR wird über einen Widerstand RL, z.B. der ohmsche Widerstand eines Fernspeiseabschnitts, an einer Gleichspannungsquelle QU (GSQ in Fig. 1) betrieben.

Als Eingangsspannung UE des Schaltreglers steht nicht die volle Quellenspannung der Gleichspannungsquelle QU zur Verfügung, sondern die um den Spannungsabfall am Widerstand RL verminderte Spannung. Die Eingangspannung UE liegt an der Serienschaltung bestehend aus der Primärwicklung W 1 der Schaltregler-Induktivität LS und dem Schaltreglerstellglied, hier als Feldeffekttransistor F1 ausgebildet. Parallel zu dieser Serienschaltung liegt ein Kondensator CE. Die Sekundärwicklung W 2 der Schaltregler-Induktivität LS ist in üblicher Weise mit einem Gleichrichter GR und einem ausgangsseitigen Glättungskondensator CA beschaltet, an welchem die Ausgangsspannung UA des Schaltreglers abnehmbar ist. Die Steuerung des Feldeffekttransistors F 1 erfolgt beim Ausführungsbeispiel über eine Steuerschaltung PBM, die einen Pulsbreitenmodulator enthält und in üblicher Weise (vgl. beispielsweise Valvo Techn. Informationen für die Industrie 76 10 27, Schaltnetzteile mit Transistoren der Reihe BUX 80, Oktober 1976; Siemens Components 18, Heft 2, 1980, Seite 82 bis 88) aufgebaut ist. Im Normalbetrieb wird die Pulsbreite der Steuerimpulse für den Feldeffekttransistor F 1 in Abhängigkeit der Höhe der Ausgangspannung UA verändert. Hierzu ist zur Überwachung der Ausgangsspannung UA ein Reglerverstärker RV im Ausgangskreis des Schaltreglers vorgesehen. Über einen Optokoppler OK wird das Ausgangssignal des Regelverstärkers RV zum Pulsbreitenmodulator PBM übertragen. Zur Beeinflussung des Anlaufverhaltens des Schaltreglers ist ein Fehlerverstärker OP 1 vorgesehen, dessen Ausgang mit einem weiteren Steuereingang der Steuerschaltung PBM verbunden ist. Dieser Fehlerverstärker OP 1 ist eingangsseitig folgendermaßen beschaltet:
- der erste Eingang ist einerseits über einen ersten Widerstand R 1 mit einer Referenzspannungsquelle QR und andererseits über einen zweiten Widerstand R 2 mit einer gesteuerten Stromquelle QI verbunden
- der zweite Eingang ist über den aus den Widerständen R 3 und R 4 bestehenden Spannungsteiler mit der Eingangsspannung UE beaufschlagt.

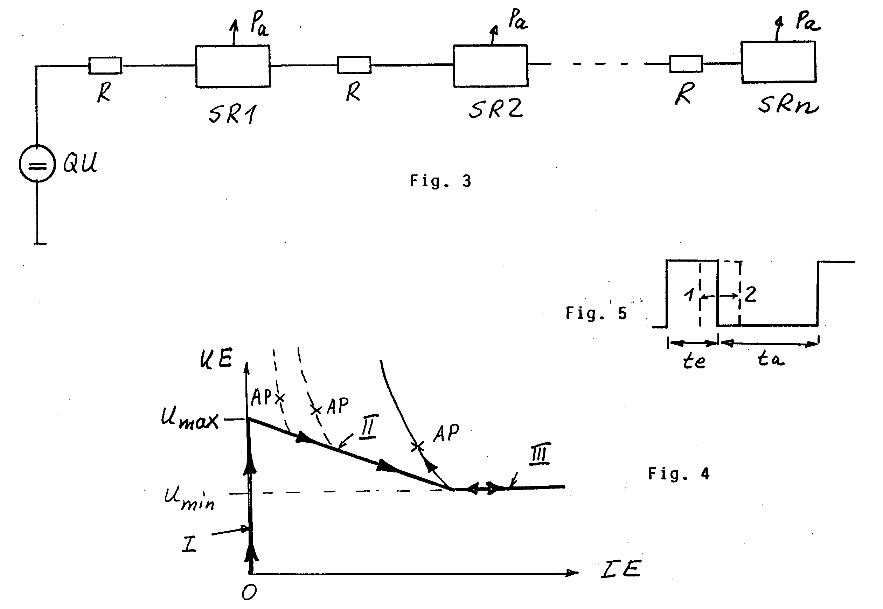

Der zweite Eingang des Fehlerverstärkers OP1 ist somit mit einer Differenzspannung U_{ref}, beaufschlagt, die aus der Differenz der an der Referenzspannungsquelle QR anstehenden Referenzspannung U_{ref} und einer Hilfsspannung UH besteht. Die Hilfsspannung UH entspricht dem Spannungsabfall am Widerstand R1: UH = R 1 · IQ, wobei IQ den von der Stromquelle QI getriebenen Strom darstellt. Die Stromquelle QI wird in Abhängigkeit der augenblicklichen Höhe des Energieaufnahmestromes IE des Schaltreglers gesteuert. Zur Erfassung des Energieaufnahmestromes IE ist hierzu ein Stromsensor SI vorgesehen, z.B. ein Stromwandler oder ein Strommeßwiderstand, der mit dem Steuereingang der Stromquelle QI verbunden ist. Die Hilfsspannung UH und der Energieaufnahmestrom IE sind durch diese Beschaltung zueinander proportional. Der Proportionalitätsfaktor wird so gewählt wie die Steigung jener Kennlinie, die sich aus einer Mehrzahl von in Kette geschalteten und gleich aufgebauten Schaltreglern SR1, SR2, ..., SRn ergibt, die von der Gleichspannungsquelle QU gemeinsam gespeist werden und jeweils durch einen Leitungswiderstand R voneinander getrennt sind (Fig. 3). Die Arbeitspunkte AP der Schaltregler liegen knapp über dieser Kennlinie (Fig. 4).

Die Eingangskennlinie eines Schaltreglers nach der Erfindung setzt sich gemäß Fig. 4 aus folgenden Stücken zusammen:
I. im Bereich 0 ≦ UE ≦ Uₘₐₓ ist der Energieaufnahmestrom IE = 0,
II. im Bereich Uₘₐₓ > UE > Uₘᵢₙ gilt:
   UE = Uₘₐₓ - K · IE,
   Dieses Kennlinienstück wird durch die Beziehung:
   U_{ref}, - R1 · IQ
   nachgebildet. Der Propartionalitätsfaktor K ist, wie der Vergleich zeigt, durch den Widerstand R1 vorgebbar.
III. UE = Uₘᵢₙ.
   Die Spannung Uₘᵢₙ entspricht z.B. der halben Quellenspannung der Gleichspannungsquelle QU. Die Spannung Uₘₐₓ ist die maximal auftretende Spannung am Eingang eines Schaltreglers.

Je nach Belastung geht die Schaltregler-Kennlinie nach dem Anlaufvorgang von der Anlaufkennlinie ausgehend in eine der in Fig. 4 dargestellten Leistungshyperbeln über. Wie die Fig. 5 zeigt, werden die Steuerimpulse bezüglich ihrer Impulslängente (Einschaltung als Schaltreglerstellgliedes) im Gegensatz zu den Impulslängen ta (Ausschaltung des Schaltreglerstellgliedes) im Falle 1:
UE < U_{ref}, verkleinert
und im Falle 2:
UE > U_{ref}, vergrößert.

Ein Unterschreiten der durch die Kennlinienstücke I bis III vorgegebenen Linie ist somit ausgeschlossen - undefinierte und unerwünschte Betriebszustände können somit nicht auftreten.

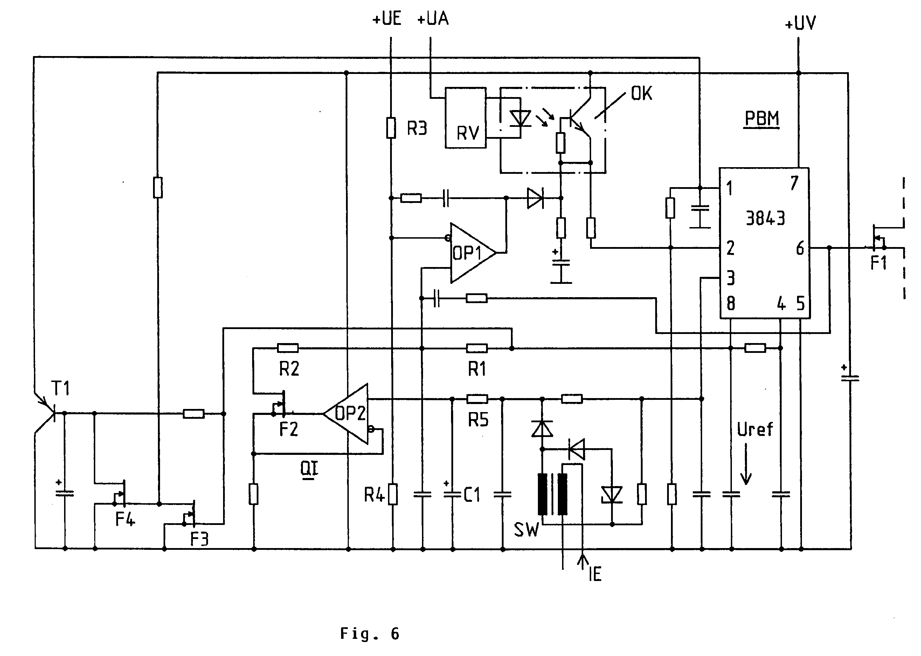

In Fig. 6 ist ein Stromlaufplan zur Steuerung des Schaltreglerstellgliedes F1 dargestellt. Der Stromsensor SI für den Eingangsstrom IE besteht aus dem Stromwandler SW. Der vom Stromwandler erfasste Eingangsstrom IE wird integriert (R5, C1) und der aus dem Operationsverstärker Op2 und dem Feldeffekttransistor F2 gebildeten Stromquelle QI als Steuersignal zugeführt. Als Steuerschaltung PBM mit integriertem Pulsbreitenmodulator ist hier der Baustein 3843 von Unitrode verwendet. Die Referenzspannung U_{ref} am Pin 8 dieses Bausteins ist erst dann verfügbar, wenn die Versorgungsspannung UV, zugeführt am Pin 7, einen Schwellwert überschritten hat. Für einen langsamen Anlauf ist hier eine zusätzliche Beschaltung vorgesehen, bestehend aus den Feldeffekttransistoren F3 und F4 und dem Bipolartransistors T1. Wenn die Referenzspannung Uref erscheint, wird der Feldeffekttransistor F3 leitend. Dies führt zum Sperren des Feldeffekttransistors F4. Über den nun freigegebenen Bipolartransistor T1, der über Pin1 auf den Pulsbreitenmodulator einwirkt, wird letzterer freigegeben und die Steuerung erfolgt nun über das Ausgangssignal des Optokopplers OK und das Ausgangssignal des Fehlerverstärkers OP 1.

## Patentansprüche

1. Kabelgebundenes Gleichspannungs-Fernspeisesystem zur Versorgung von Verbrauchern (ZR1, ZR2, ..., ZRn), wobei jeder Fernspeiseabschnitt einen Gleichspannungswandler (GL1, GL2, ..., GLn) enthält, dadurch gekennzeichnet, daß jeder Gleichspannungswandler (GL1, GL2, ..., GLn) als Schaltregler ausgebildet ist, mittels dessen die Fernspeisespannung am Anfang eines nachfolgenden Fernspeiseabschnittes auf einen Wert hochregelbar ist, der dem ohne besonderen Berührungsschutzmaßnahmen zulässigen Maximalwert der Fernspeisespannung (U) entspricht.

2. Fernspeisesystem nach Anspruch 1, dadurch gekennzeichnet, daß die Gleichspannungswandler (GL1, GL2, ..., GLn) zur Versorgung der Verbraucher (ZR1, ZR2, ..., ZRn) jeweils einen zweiten Ausgang aufweisen, der vom ersten jeweils zur Fernspeiseleitung führenden Ausgang galvanisch getrennt ist.

3. Fernspeisesystem nach Anspruch 1 oder 2, dadurch gekennzeichnet, daß die Schaltregler folgende Merkmale aufweisen:
- einen Stromsensor (SI) zur Messung des Energieaufnahmestroms (IE) des Schaltreglers,
- einen Spannungssensor (R3, R4) zum Erfassen der Eingangsspannung (UE) des Schaltreglers,
- einer gesteuerten Stromquelle (QI), deren Steuereingang an den Stromsensor (SI) angeschlossen ist,
- eine Referenzspannungsquelle (QR),
- einen Fehlerverstärker (OP1), dessen erster Eingang sowohl über einen ersten Widerstand (R1), an dem eine Hilfsspannung (UH) abfällt, der Referenzspannungsquelle (QR) als auch über einen zweiten Widerstand (R2) mit der Stromquelle (QI) verbunden ist und dessen zweiter Eingang an den Spannungssensor (R3, R4) angeschlossen ist,
- eine Steuerschaltung (PBM) über welche der Ausgang des Fehlerverstärkers (OP1) mit dem Stelleingang des Schaltreglerstellgliedes (F1) verbunden ist.

4. Fernspeisesystem nach Anspruch 3, dadurch gekennzeichnet, daß die Schaltregler so ausgestaltet sind, daß die Hilfsspannung (UH) und der Energieaufnahmestrom (IE) der Schaltregler jeweils proportional zueinander sind und daß der Proportionalitätsfaktor so gewählt ist, wie die Steigung jener Kennlinie, die sich aus den Arbeitspunkten einer Mehrzahl von in Kette geschalteten und gleich aufgebauten Schaltreglern (SR1, SR2, ..., SRn) ergibt, die von einer Gleichspannungsquelle (QU) am Eingang des Fernspeisesystems gemeinsam gespeist werden und jeweils durch einen Leitungswiderstand (R) voneinander getrennt sind.

## Claims

1. A cable-bound d.c. voltage supply system for supplying loads (ZR1, ZR2, ... ZRn), wherein each remote supply section includes a d.c. voltage converter (GL1, GL2, ... GLn), characterized in that each d.c. voltage converter (GL1, GL2, ... GLn) is embodied as a switching regulator, by means of which the remote supply voltage can be adjusted at the beginning of a following remote supply section to a value that corresponds to the acceptable maximum value of the remote supply voltage (U) permissable without any particular contact safety measures.

2. The remote supply system as defined by claim 1, characterized in that the d.c. voltage converters (GL1, GL2, ... GLn) for supplying the loads (ZR1, ZR2, ... ZRn) have respectively a second output that is galvanically separated from the first output respectively leading to the remote supply line.

3. The remote supply system as defined by claim 1 or 2, characterized in that the switching regulators have the following features:
- a current sensor (SI) for measuring the energy pick-up current (IE) of the switching regulator;
- a voltage sensor (R3, R4) for detecting the input voltage (UE) of the switching regulator;
- a controlled current source (QI) whose control input is connected to the current sensor (SI);
- a reference voltage source (QR);
- an error amplifier (OP1) whose first input is connected via a first resistor (R1), where an auxiliary voltage drops, to the reference voltage source (QR) as well as to the current source (QI) via a second resistor (R2), and whose second input is connected to the voltage sensor (R3, R4); and
- a control circuit (PBM), via which the output of the error amplifier (OP1) is connected to the control output of the switching regulator member (F1).

4. The remote supply system as defined by claim 3, characterized in that the switching regulators are embodied such that the auxiliary voltage (UH) and the energy pick-up current (IE) of the switching regulator are respectively proportional to one another, and that the proportional factor is selected to be the same as the slope of that characteristic curve that results from the operating points of a plurality of switching regulators (SR1, SR2, ... SRn) connected in chains and embodied identically, and that are supplied together from a d.c. voltage source (QU) at the input of the remote supply system and are respectively separated from each other by means of a specific resistance (R).

## Revendications

1. Système de téléalimentation à tension continue, par câble, pour alimenter des consommateurs (ZR1, ZR2, ..., ZRn), dans lequel chaque tronçon de téléalimentation contient un convertisseur de tension continucontinu (GL1, GL2, ..., GLn), caractérisé en ce que chaque convertisseur de tension continu-continu (GL1, GL2, ..., GLn) est réalisé comme un régulateur à commutation, au moyen duquel la tension de téléalimentation au début d'un tronçon de téléalimentation suivant peut être élevée, par la régulation, à une valeur correspondant à la valeur maximale admissible, sans mesures particulières de protection contre les contacts accidentels, de la tension de téléalimentation (U).

2. Système de téléalimentation selon la revendication 1, caractérisé en ce que les convertisseurs de tension continu-continu (GL1, GL2, ..., GLn) présentent chacun, pour l'alimentation des consommateurs (ZR1, ZR2, ZRn), une deuxième sortie qui est isolée galvaniquement de la première sortie menant chaque fois à la ligne de téléalimentation.

3. Système de téléalimentation selon la revendication 1 ou 2, caractérisé en ce que les régulateurs à commutation comprennent:
- un capteur de courant (SI) pour mesurer le courant d'absorption d'énergie (IE) du régulateur à commutation,
- un capteur de tension (R3, R4) pour détecter la tension d'entrée (UE) du régulateur à commutation,
- une source de courant pilotée (QI) dont l'entrée de pilotage est connectée au capteur de courant (SI),
- une source de tension de référence (QR),
- un amplificateur d'erreurs (OP1) dont la première entrée est reliée à la fois, à travers une première résistance (R1), sur laquelle se produit une chute de tension constituant une tension auxiliaire (UH), à la source de tension de référence (QR) et, à travers une deuxième résistance (R2), à la source de courant (QI), et dont la deuxième entrée est raccordée au capteur de tension (R3, R4), ainsi que,
- un circuit de commande (PBM) au travers duquel la sortie de l'amplificateur d'erreurs (OP1) est reliée à l'entrée de réglage de l'élément de réglage (F1) du régulateur à commutation.

4. Système de téléalimentation selon la revendication 3, caractérisé en ce que les régulateurs à commutation sont réalisés de manière que la tension auxiliaire (UH) et le courant d'absorption d'énergie (IE) des régulateurs à commutation soient proportionnels entre eux, et que le facteur de proportionnalité est choisi en conformité avec la pente de la caractéristique définie par les points de fonctionnement d'une pluralité de régulateurs à commutation (SR1, SR2, ..., SRn) montés en chaîne et ayant la même construction, régulateurs qui sont alimentés collectivement par une source de tension continue (QU) à l'entrée du système de téléalimentation et sont chaque fois séparés l'un de l'autre par une résistance de ligne (R).
